# NEUE EUROPÄISCHE PATENTSCHRIFT

(11) **EP 0 808 870 B2**
(45) Veröffentlichungstag und Bekanntmachung des Hinweises auf die Entscheidung über den Einspruch: **27.08.2008**
(45) Hinweis auf die Patenterteilung: 24.07.2002
(21) Anmeldenummer: 97107622.9
(22) Anmeldetag: 09.05.1997
(51) Int. Cl.: C08L 23/10, C08L 23/14, C08L 23/12, C08F 297/08

(54) **Hochmolekulares Ethylen/Propylen-Reaktorblend mit breiter Molmassenverteilung**
High molecular weight ethylene/propylene reactor blend having broad molecular weight distribution
Mélange en réacteur d'éthylène et propylène à poids moléculaire élevé ayant une large distribution de poids moléculaire

(30) Priorität: 24.05.1996 DE 19621022
(43) Veröffentlichungstag der Anmeldung: 26.11.1997
(73) Patentinhaber: Basell Poliolefine Italia S.r.l., 20124 Milano (IT)
(72) Erfinder: Dolle, Volker, Dr., 64625 Bensheim (DE); Böhm, Thomas, 64291 Darmstadt (DE)
(74) Vertreter: Luderschmidt, Schüler & Partner

(56) Entgegenhaltungen:
- EP-A- 0 028 076
- EP-A- 0 339 804
- EP-A- 0 498 603
- WO-A-91/14718
- WO-A-96/11216
- WO-A-97/33117
- US-A- 4 500 682
- US-A- 4 950 720

## Beschreibung

Die vorliegende Erfindung betrifft ein Verfahren zur Herstellung eines hochmolekularen Reaktorblends aus einem hochmolekularen Ethylen-Propylen-Copolymer und einem niedermolekularen Polypropylen, das einen Ethylengehalt im Bereich von 0,1 bis 2 Gew.-% besitzt.

Aus der DE-A-40 19 053 sind Homopolymere mit breiter Molmassenverteilung bekannt. Diese Homopolymeren können unter großem Aufwand als Rohre verarbeitet werden. So hergestellte Rohre weisen aber nachteiligerweise eine hohe Brüchigkeit und eine rauhe Oberfläche auf, wodurch diese Rohre in der Praxis nicht mehr brauchbar sind.

Aus der EP-A-573 862 ist ein Verfahren zur Herstellung von Polypropylen mit einer Molmassenverteilung M_{w}/Mₙ von > 20 und guten Verarbeitungseigenschaften bekannt. Der Schmelzflußindex beträgt 2 dg/min; die intrinsische Viskosität beträgt 280 ml/g. Das so beschriebene Polypropylen wird in einer Gasphasenpolymerisation hergestellt. Die Beispiele 1 bis 4 der EP-A-573 862 beschreiben die Herstellung eines breitverteilten Homo-PP Pulvers. Die Polydispersität M_{w}/Mₙ ist zwar in keinem Beispiel angegeben, aber aufgrund der Angaben zur intrinsischen Viskosität (800 ml/g und 67 ml/g) kann auf eine sehr große Molmassenspreizung in der ersten und zweiten Stufe geschlossen werden.

Die aus dem Stand der Technik (EP-A-573 862) bekannten Verfahren wurden nachgearbeitet, um die Eigenschaften der Materialien prüfen zu können. Es wurde gefunden, daß alle Rohstoffe eine große Brüchigkeit bei eingeschränkter Verarbeitungsqualität in Verbindung mit einer Materialinhomogenität aufwiesen. Die Herstellung von PP-Rohren in einem üblichen Extrusionsverfahren war z.T. nicht möglich, weil die Viskosität der Schmelze für ein Extrusionsverfahren nicht ausreichend war.

WO 91/14718 beschreibt ein Verfahren zur Herstellung eines Reaktorblends mit breiter oder bimodaler Molmassenverteilung in einem Zweistufenverfahren, wobei das Gesamtpolymer eine Polydispersität M_{w}/Mₙ von 10 bis 50 besitzt.

Aufgabe der vorliegenden Erfindung war es, ein Verfahren zur Herstellung einer verbesserten Formmasse zu finden, mit der sich auf herkömmlichen Fertigungswerkzeugen Rohre herstellen lassen, die neben einer niedrigen Brüchigkeit und einer glatten Oberfläche zusätzlich eine hohe Zähigkeit und eine hervorragende Steifigkeit in Verbindung mit einem hervorragenden Zeitstandvermögen besitzen.

Gelöst wird diese Aufgabe durch ein Verfahren zur Herstellung eines hochmolekularen Reaktorblends aus einem hochmolekularen Ethylen-Propylen-Copolymer und einem niedermolekularen Polypropylen, das einen Ethylengehalt im Bereich von 0,1 bis 2 Gew.-%, einen Schmelzflußindex MFR (230/5) von ≤ 5 dg/min und eine Molmassenverteilung M_{w}/Mₙ im Bereich von 6 bis 20 besitzt, durch Copolymerisation von Propylen und Ethylen in einer ersten Stufe und durch Polymerisation von Propylen, aus der ersten in die zweite Stufe überführtem Ethylen und ggf. Copolymerisation mit einem weiteren 1-Olefin mit 4 bis 20 C-Atomen in Suspension bei einer Temperatur im Bereich von 30 bis 150 °C, einem Druck von 10 bis 100 bar und einer Verweilzeit von 30 min bis 6 h in Gegenwart eines Katalysators, einer aluminiumorganischen Verbindung (B) und einer Organosiliciumverbindung (C) in einer zweiten Stufe, dadurch gekennzeichnet, daß in der ersten Stufe das Suspensionsmittel sowohl Monomer als auch Suspensionsmittel ist, daß in der ersten Reaktionsstufe ein hochmolekulares Ethylen/Propylen-Copolymerisat mit einer Viskosität von 500 bis 1400 ml/g und einem Anteil am Gesamtpolymeren von 20 bis 80 % hergestellt wird und daß nach der zweiten Reaktionsstufe das Gesamtpolymer eine Viskosität von 200 bis 400 ml/g und eine Polydispersität M_{w}/Mₙ von 6 bis 20 aufweist, wobei in der ersten Reaktionsstufe ein Phasenverhältnis im Bereich von 2,5 bis 4 l flüssiges Propylen pro kg PP eingestellt wird und in der zweiten Reaktionsstufe bei einer Temperatur im Bereich von 55 bis 100 °C polymerisiert wird, wobei ein Phasenverhältnis von 1 bis 2,5 l flüssiges Propylen pro kg PP eingestellt wird, wobei in der ersten und in der zweiten Reaktionsstufe unterschiedliche Phasenverhältnisse eingestellt werden.

Überraschenderweise wurde gefunden, daß das erfindungsgemäß erhaltende Propylen/Ethylen/Copolymerisat sich auf herkömmlichen Fertigungswerkzeugen zu Rohre verarbeiten läßt, die glatte Fertigteiloberflächen, gute Verarbeitungsqualität, hohe Schlagzähigkeit bei guter Härte und Zeitstandfestigkeit aufweisen.

Im erfindungsgemäßen Verfahren wird in der ersten Reaktionsstufe ein hochmolekulares Ethylen-Propylen-Copolymer mit einer Viskosität von 500 bis 1400 ml/g und einem Anteil am Gesamtpolymeren von 20 bis 80 Gew.-%, vorzugsweise von 45 bis 75 Gew.-% hergestellt, besonders bevorzugt von 48 bis 65 Gew.-%, während in der zweiten Reaktionsstufe ein niedermolekulares Produkt mit einer Viskosität von 200 bis 400 ml/g und und einem Anteil von 80 bis 20 Gew.-%, vorzugsweise von 55 bis 25 Gew.-%, besonders bevorzugt von 52 bis 35 Gew.-%, hergestellt wird.

Die Polymerisation wird in einem sogenannten Masseverfahren (Bulk-Process) in zwei Reaktionsstufen durchgeführt, wobei das Monomere, das Propylen, Edukt und Suspensionsmittel zugleich ist.

Das erfindungsgemäße Verfahren wird insbesondere als zweistufige Polymerisation mit vorgeschalteter Vorpolymerisation ausgeführt. Sowohl die erste und die zweite Reaktionsstufe als auch die Vorpolymerisation können entweder in diskontinuierlicher oder auch kontinuierlicher Betriebsweise durchgeführt werden. Bevorzugt wird die kontinuierliche Betriebsweise.
Die Komponente B und die Komponente C werden vor der Vorpolymerisation miteinander vermischt und dann mit dem Katalysator in Kontakt gebracht. In Gegenwart dieser aktiven Komponenten wird Propylen in Suspension oder im Masseverfahren vorpolymerisiert. Bevorzugt ist die Vorpolymerisation im flüssigen Monomeren. Die Verweilzeit beträgt 4 bis 10 min, die Temperatur der Vorpolymerisation liegt im Bereich von 10 bis 25°C.

Das Vorpolymerisat wird dann in die erste Reaktionsstufe der Polymerisation überführt und in flüssigem Propylen bei einer Temperatur von 55 bis 100 °C und einer Verweilzeit von 0,5 bis 3,5 h polymerisiert. Es wird ein Phasenverhältnis im Bereich von 2,5 bis 4 l flüssiges Propylen pro kg PP, vorzugsweise von 3,3 l flüssiges Propylen pro kg PP, eingestellt. In die erste Reaktionsstufe wird Ethylen kontinuierlich in der Art eindosiert, daß sich eine C₂-Konzentration in der flüssigen Phase von 0,1 bis 2 Gew.-% bevorzugt von 0,1 bis 1.5 Gew.-% einstellt. Zur Molmassenregelung wird Wasserstoff eindosiert.

Nach der ersten Reaktionsstufe wird das mehrphasige System in die zweite Reaktionsstufe überführt und dort bei einer Temperatur von 55 bis 100 °C polymerisiert. Die zweite Reaktionsstufe findet in einem zweiten Reaktor statt. Dort wird ein Phasenverhältnis von 1 bis 2,5 l flüssiges Propylen pro kg PP, vorzugsweise von 1,9 l flüssiges Propylen pro kg PP, eingestellt. Erfindungsgemäß werden bei dem hier beschriebenen Verfahren unterschiedliche Phasenverhältnisse in den beiden Reaktoren eingestellt. In der zweiten Stufe wird kein Ethylen zudosiert. Zur Molmassenregelung wird auch in der zweiten Stufe H₂ zudosiert.

Die Temperaturen und die Wasserstoffkonzentrationen in beiden Reaktoren können gleich oder verschieden sein. Die Ethylenkonzentration ist in beiden Reaktoren verschieden. Geeignete Reaktoren sind Rührkessel-Reaktoren oder Schlaufenreaktoren.

Es ist möglich, das Monomere zwischen den beiden Reaktoren zu entspannen und das noch polymerisationsaktive Katalysator/PP System in den zweiten Reaktor einzudosieren. Dabei kann in dem zweiten Reaktor auch eine niedrigere Wasserstoffkonzentration als im ersten Reaktor eingestellt werden.

Als Komponente B wird Trimethylaluminium, Triisobutylaluminium oder Triethylaluminium verwendet. Bevorzugt ist die Verwendung von Triethylaluminium oder Triisobutylaluminium. Besonders bevorzugt ist die Verwendung von Triethylaluminium.

Als Komponente C wird Cyclohexylmethyldimethoxysilan, Biscyclopentyldimethoxysilan oder Diphenyldimethoxysilan eingesetzt. Besonders bevorzugt ist die Verwendung von Cyclohexylmethyldimethoxysilan oder Biscyclopentyldimethoxysilan.

Die Komponente B wird in einer Konzentration von 0,001 bis 10 mmol/l, vorzugsweise 0,1 bis 5 mmol/l eingesetzt. Die Komponente C wird in einem Verhältnis R zur Komponente B eingesetzt. Das Verhältnis berechnet sich als Quotient der Konzentration B zu der Konzentration C jeweils in mol /l. Das Verhältnis R beträgt 1 bis 200, bevorzugt 2 bis 100, besonders bevorzugt 2,5 bis 75.

Erfindungsgemäß bevorzugt sind Produkte mit einem MFR (230/5) von 0,01 bis 5 dg/min, besonders bevorzugt von 0,02 bis 2 dg/min. Das Reaktorblend gemäß der Erfindung besteht zu 0,5 bis 2 Gew.-% aus Ethylenbausteinen und zu 99.5 bis 98 Gew.-% aus Propylenbausteinen.

Nach der zweiten Reaktionsstufe wird das Gemisch aus Propylen, Wasserstoff und ggf. Ethylen aufgearbeitet. Bevorzugt ist das schnelle Verdampfen des flüssigen Monomeren in einer Stufe. Anschließend wird das gereinigte Copolymerisat im Inertgasstrom getrocknet und es wird sichergestellt, daß das Copolymerisat monomerfrei ist. Das so erhaltene hochmolekulare Copolymerisat wird mit Stabilisatoren, Gleitmitteln, Füllstoffen, Pigmenten etc. versetzt und granuliert. Die Granulierung wird in einem Extruder oder Kneter vorgenommen.

Das verdampfte Monomergemisch wird kondensiert und destillativ in Propylen, ggf. Ethylen und Wasserstoff aufgetrennt. Die Destillation ist so auszulegen, daß eine Wasserstoffkonzentration von < 150 ppm besonders bevorzugt < 40 ppm sichergestellt ist. Das so gereinigte Monomer wird dann wieder in den ersten Reaktor eindosiert.

Die folgenden Beispiele sollen die Erfindung erläutern. Zur Charakterisierung der hergestellten Produkte wurden folgende polymeranalytischen Methoden verwendet:

| | |
|---|---|
| Schmelzindex MFR (230/5) | nach DIN 53735 |
| Viskositätszahl [ml/g] | bestimmt bei 135 °C in Dekalin |
| Zeitstand | nach DIN 53759 |
| Schlagzähigkeit | nach DIN 8078 |
| Verhältnis M_{w}/Mₙ | durch Gelpermeationschromatographie in Orthodichlorbenzol bei einer Temperatur von 135 °C auf einem Waters 150C Chromatographen. |

### Beispiel 1

Es wird in zwei hintereinandergeschalteten Rührkesseln von je 16 l Inhalt kontinuierlich polymerisiert. Beide Reaktoren sind mit 10 l flüssigem Propylen beschickt. Als Cokatalysator B wird Triethylaluminium in einer Konzentration von 1 mmol/l verwendet; die Konzentration des Stereoregulators C beträgt 0,1 mmol/l. Als Stereoregulator (C) wird Cyclohexylmethyldimethoxysilan verwendet. Die Wasserstoffkonzentration in der flüssigen Phase wird auf 40 Vol. ppm eingestellt.

Im ersten Reaktor wird ein Gemisch aus Propylen und Ethylen bei 70 °C in Gegenwart des Montell FT4S Katalysators polymerisiert. Katalysator, Cokatalysator, Ethylen, Propylen und Wasserstoff werden kontinuierlich nachdosiert. Pro kg Propylen wurden 3,8 g Ethylen eindosiert. Es wird ein Feststoffanteil von 224 g PP pro Liter Suspension gefahren. Daraus berechnet sich ein Phasenverhältnis von 3,3 l flüssiges Propylen pro kg PP. Wasserstoff wird so nachdosiert, daß sich in der flüssigen Phase eine Konzentration von 40 ppm einstellt.

Das im ersten Reaktor erhaltene Copolymer wird zusammen mit dem Katalysator in den zweiten Reaktor überführt. Im zweiten Reaktor wird Wasserstoff und Propylen nachdosiert. Die H₂-Konzentration in der flüssigen Phase beträgt 420 Vol. ppm. Die Reaktionstemperatur im zweiten Reaktor beträgt ebenfalls 70 °C. Es wird ein Feststoffanteil von 324 g PP pro Liter Suspension gefahren. Daraus berechnet sich ein Phasenverhältnis von 1,9 l flüssiges Propylen pro kg PP.

Nachdem das Polymerisat als Pulver aus dem zweiten Reaktor isoliert worden war, ergab sich eine Katalysatorausbeute von 16 kg PP/g Katalysator. Es wird eine Molmassenverteilung M_{w}/Mₙ von 9,0 gemessen, ein MFR-Wert von 0,8 dg/min, eine Viskositätszahl von 570 ml/g. IR-spektroskopisch wird ein C₂-Einbau von 0.5 Gew.-% gemessen. Der xylolkaltlösliche Anteil wird mit 3,3 Gew.-% gemessen.

### Vergleichsbeispiel 1

Es wurde verfahren wie in Beispiel 1. Das Phasenverhältnis wurde jedoch in Reaktor 1 und Reaktor 2 auf den gleichen Wert eingestellt; in beiden Reaktoren wurde die gleiche Wasserstoffkonzentration eingestellt. Weder in den ersten Reaktor noch in den zweiten Reaktor wurde Ethylen eindosiert. Für M_{w}/Mₙ wurde ein Wert von 4,0 bestimmt.

### Beispiel 2

Das aus Beispiel 1 erhaltene Pulver wurde unter Inertgas in einem Zweischneckenextruder mit 53 mm Schneckendurchmesser bei ca. 240 °C granuliert. Dabei wurden als Stabilisatoren 0,15 % ®Irganox 1010 und 0,15 % ®Hostanox PAR 24 hinzugefügt. Außerdem wurde eine Farbmischung zugesetzt. Das erhaltene Granulat wurde einer M_{w}/Mₙ-Bestimmung unterzogen. M_{w}/Mₙ betrug 8,0.

### Beispiel 3

Das Granulat aus Beispiel 2 wurde auf einer Rohrextrusionsanlage mit einem 60mm Nutbuchsenextruder und einem Vakuum-Sprühtank zu Rohren der Dimension 32x4,5 mm (Innendurchmesser = 32 mm, Wandstärke = 4,5 mm) verarbeitet. Der Massedurchsatz betrug 150 kg/h. Die Massetemperatur wurde auf 210 °C eingestellt.

Es wurde festgestellt, daß die Verarbeitung sehr gleichmäßig verlief und die Rohroberfläche sowohl innen als auch außen sehr glatt waren. Die Rohroberfläche wurde charakterisiert, indem sie mit Rohren verglichen wurde, die aus einem Granulat mit enger Molmassenverteilung (s. Vergleichsbeispiel 1 M_{w}/Mₙ = 4) auf der gleichen Rohrextrusionsanlage unter gleichen Bedingungen gefertigt wurden. Rohre, hergestellt aus Granulat nach Beispiel 2, erfüllten die Anforderungen der DIN 8078 (Allgemeine Güteanforderungen, Prüfung) bezüglich Schlagbiegeversuch am Rohr u. Zeitstand-Innendruckprüfung.

| Prüftemperatur | Prüfspannung | Mindeststandzeit nach DIN 8078 | gemessene Standzeit |
|---|---|---|---|
| 95 °C | 3,5 N/mm2 | > 1000 h | > 1200 h |
| 120 °C | 3,0 N/mm2 | > 200 h | > 250 h |

Die Zeitstand-Innendruckprüfungen erfolgten nach DIN 8078 (95°C, Sigma 3,5 N/mm²) und in Anlehnung an die DIN 8078 (120°C, Sigma 3,0 N/mm²). Wie aus den oben angegebenen Werten zu erkennen ist, überschritten die Rohre, hergestellt aus Granulat nach Beispiel 2, deutlich die geforderten Mindeststandzeiten der DIN 8078 und hatten hervorragende Oberflächen. Die zum Vergleich hergestellten Rohre mit Granulat aus Vergleichsbeispiel 1 versagten in der Zeitstand-Innendruckprüfung.

### Beispiel 4

In einer Polymerisations-Pilot-Anlage wird Propylen zu PP polymerisiert. Der Katalysator (FT4S von Montell), Triethylaluminium und Cyclohexylmethyldimethoxysilan werden miteinander vermischt und im Vorpolymerisationsreaktor kontinuierlich in flüssigem Propylen vorpolymerisiert. Das Gemisch aus Katalysator, Triethylaluminium, Cyclohexylmethyldimethoxysilan, Propylen und Polypropylen wird in den ersten Reaktor eindosiert. Zusätzlich wird Propylen über ein Vorratsgefäß dem ersten Reaktor zugeführt. Im flüssigen Propylen werden Wasserstoff und Ethylen gelöst und über diesen Strom dann in den Reaktor eindosiert. Im flüssigen Propylen wird eine Konzentration von 40 ppm Wasserstoff eingestellt. In den ersten Reaktor werden 17 t/h Propylen eingefahren. Pro Tonne Propylen werden 1,8 kg Ethylen eindosiert. Im Reaktor wird Propylen in Anwesenheit des FT4S Katalysators zu PP umgesetzt. Dem ersten Reaktor wird kontinuierlich das Reaktionsgemisch entnommen und in den zweiten Reaktor eindosiert. In den zweiten Reaktor wird 7 t/h Propylen nachdosiert. In diesem Propylen Strom wird eine Konzentration von 420 ppm Wasserstoff eingestellt. Es wird in den zweiten Reaktor kein Ethylen eindosiert. Nach Durchlaufen des zweiten Reaktors wird das Reaktionsgemisch im Flash-Gefäß durch Entspannen auf 18 bar aufgearbeitet und das PP und die gasförmigen Komponenten voneinander separiert. Das gasförmige Propylen wird kondensiert, destilliert und anschließend in den Vorratstank zurückgefahren. Pro Liter flüssiges Propylen, das in den ersten Reaktor eindosiert wird, werden 0.9 mmol Al, 0.18 mmol Donor und 5 mmol Katalysator (gemessen als mmol Ti) eindosiert.

In dem ersten Reaktor wurde ein Phasenverhältnis von 3,3 l flüssiges Propylen pro kg PP eingestellt; im zweiten Reaktor wurde ein Phasenverhältnis von 1,9 l flüssiges Propylen pro kg PP eingestellt. Die aus den Reaktoren abgeführten Wärmemengen verhielten sich wie 1,4 : 1 (1. Reaktor/2. Reaktor). Das erhaltene PP Produkt weist eine Polydispersität M_{w}/Mₙ von 7,0 auf.

### Vergleichsbeispiel 2

Es wurde verfahren wie in Beispiel 4, es wurde jedoch im ersten und im zweiten Reaktor ein Phasenverhältnis von 3,3 l flüssiges Propylen pro kg PP eingestellt.
Die aus den Reaktoren abgeführten Wärmemengen verhielten sich wie 3,4 : 1 (1. Reaktor/2. Reaktor).

Das erhaltene PP Produkt weist eine Polydispersität M_{w}/Mₙ von 4,8 auf. Das so erhaltene PP-Pulver wurde analog Beispiel 2 granuliert. Aus dem Granulat wurden Rohre analog Beispiel 3 hergestellt und einer Rohrzeitstandsprüfung analog Beispiel 3 unterzogen. Die Rohre wiesen eine sehr rauhe Rohroberfläche auf und erfüllten nicht die Anforderungen nach DIN 8078 Abschnitt 3.5.
Die Rohre wurden verschiedenen Zeitstandsprüfungen entsprechend DIN 53759 unterzogen: Die Sollwerte wurden nicht erreicht.

### Beispiel 5

Es wurde verfahren wie in Beispiel 4, jedoch wurde Dicyclopentyldimethoxysilan als Stereoregulator verwendet. Die Konzentration beträgt 0,036 mmol Dicyclopentyldimethoxysilan pro l flüssiges Propylen. In den ersten Reaktor wurden 40 ppm Wasserstoff eindosiert. In den zweiten Reaktor wurde im Eingasstrom eine Konzentration von 3500 mol-ppm Wasserstoff eingestellt. Es stellte sich eine Kontaktausbeute von 20 kg PP/g Kat ein. Am Endprodukt wird eine Molmassenverteilung M_{w}/Mₙ von 10,5 gefunden. Der MFR(230/5) Wert beträgt 0,8 dg/min. Pro Tonne Propylen wird im ersten Reaktor 1,8 kg Ethylen eindosiert.

Granulierung und Rohrherstellung wurden analog Beispiel 2 und Beispiel 3 ausgeführt. Bei der Rohrprüfung wurden die Anforderungen nach DIN 8078 Abschnitt 3.5 erfüllt. Die Rohre wurden verschiedenen Zeitstandsprüfungen entsprechend DIN 53759 unterzogen:
Die Anforderungen nach DIN 8078 (Zeitstand-Innendruckfestigkeit und Schlagbiegeversuch am Rohr) wurden erfüllt.

| Prüftemperatur | Prüfspannung | Mindeststandzeit nach DIN 8078 | Gemessene Standzeit |
|---|---|---|---|
| 95 °C | 3,5 N/mm2 | > 1000 h | > 2000 h |
| 120 °C | 3,0 N/mm2 | > 200 h | > 320 h |

Die in der DIN 8078 vorgeschriebenen Mindeststandszeiten für Rohre aus PP-R wurden deutlich überschritten. Die Rohre besitzen eine sehr gute Zeitstand-Innendruckfestigkeit und hervorragend glatte Oberflächen.

### Beispiel 6

Es wurde verfahren wie in Beispiel 4, jedoch wurde Diphenyldimethoxysilan als Stereoregulator verwendet. Am Pulver wurde ein M_{w}/Mₙ -Wert von 6,1 gemessen.
Die Zeitstandprüfung nach DIN wurde übertroffen; die Rohroberfläche war glatt.

## Patentansprüche

1. Verfahren zur Herstellung eines hochmolekularen Reaktorblends aus einem hochmolekularen Ethylen-Propylen-Copolymer und einem niedermolekularen Polypropylen, das einen Ethylengehalt im Bereich von 0,1 bis 2 Gew.-%, einen Schmelzflußindex MFR (230/5) von ≤ 5 dg/min und eine Molmassenverteilung M_{w}/Mₙ im Bereich von 6 bis 20 besitzt, durch Copolymerisation von Propylen und Ethylen in einer ersten Stufe und durch Polymerisation von Propylen, aus der ersten in die zweite Stufe überführtem Ethylen und ggf. Copolymerisation mit einem weiteren 1-Olefin mit 4 bis 20 C-Atomen in Suspension bei einer Temperatur im Bereich von 30 bis 150 °C, einem Druck von 10 bis 100 bar und einer Verweilzeit von 30 min bis 6 h in Gegenwart eines Katalysators, einer aluminiumorganischen Verbindung (B) und einer Organosiliciumverbindung (C) in einer zweiten Stufe, **dadurch gekennzeichnet, daß** in der ersten Stufe das Suspensionsmittel sowohl Monomer als auch Suspensionsmittel ist, daß in der ersten Reaktionsstufe ein hochmolekulares Ethylen/Propylen-Copolymerisat mit einer Viskosität von 500 bis 1400 ml/g und einem Anteil am Gesamtpolymeren von 20 bis 80 % hergestellt wird und daß nach der zweiten Reaktionsstufe das Gesamtpolymer eine Viskosität von 200 bis 400 ml/g und eine Polydispersität M_{w}/Mₙ von 6 bis 20 aufweist, wobei in der ersten Reaktionsstufe ein Phasenverhältnis im Bereich von 2,5 bis 4 l flüssiges Propylen pro kg PP eingestellt wird und in der zweiten Reaktionsstufe bei einer Temperatur im Bereich von 55 bis 100 °C polymerisiert wird, wobei ein Phasenverhältnis von 1 bis 2,5 l flüssiges Propylen pro kg PP eingestellt wird, wobei in der ersten und in der zweiten Reaktionsstufe unterschiedliche Phasenverhältnisse eingestellt werden.

2. Verfahren nach Anspruch 1, **dadurch gekennzeichnet, daß** es einen MFR (230/5) im Bereich von 0,02 bis 2 dg/min und eine Molmassenverteilung M_{w}/Mₙ im Bereich von 7 bis 18 besitzt und daß es zu 0,1 bis 1,5 Gew.-% aus Ethylenbausteinen aufgebaut ist.

3. Verfahren nach Anspruch 1, **dadurch gekennzeichnet, daß** in der ersten Reaktionsstufe ein Polypropylen mit einem Anteil von 45 bis 75 Gew.-% am Gesamtpolymeren hergestellt wird.

4. Verfahren nach Anspruch 1, **dadurch gekennzeichnet, daß** in der zweiten Reaktionsstufe ein niedermolekulares Polypropylen mit einer Viskosität von 200 bis 400 ml/g und einem Anteil von 55 bis 25 Gew.-% am Gesamtpolymeren, hergestellt wird.

5. Verfahren nach Anspruch 1 **dadurch gekennzeichnet, daß** in der zweiten Reaktionsstufe ein niedermolekulares Polypropylen mit einer Viskosität von 200 bis 400 ml/g und einem Anteil von 52 bis 35 Gew.-% am Gesamtpolymeren, hergestellt wird.

6. Verfahren nach einem der Ansprüche 1 bis 5, **dadurch gekennzeichnet, daß** eine Vorpolymerisation durchgeführt wird, wobei die Komponente B und die Komponente C vor der Vorpolymerisation miteinander vermischt und dann mit dem Katalysator in Kontakt gebracht werden und wobei in Gegenwart dieser aktiven Komponenten Propylen in Suspension bei einer Verweilzeit von 4 bis 15 min und einer Temperatur im Bereich von 10 bis 25 °C vorpolymerisiert wird.

7. Verfahren nach einem der Ansprüche 1 bis 6, **dadurch gekennzeichnet, daß** in der ersten Reaktionsstufe der Polymerisation in flüssigem Propylen bei einer Temperatur von 55 bis 100 °C und einer Verweilzeit von 0,5 bis 3,5 h polymerisiert wird.

8. Verfahren nach einem der Ansprüche 1 bis 7, **dadurch gekennzeichnet, daß** in der ersten Reaktionsstufe eine Ethylenkonzentration in der flüssigen Phase von 0,1 bis 2 Gew.-% eingestellt wird.

9. Verfahren nach einem der Ansprüche 1 bis 8, **dadurch gekennzeichnet, daß** als Komponente B Trimethylaluminium, Triisobutylaluminium oder Triethylaluminium eingesetzt werden.

10. Verfahren nach einem der Ansprüche 1 bis 9, **dadurch gekennzeichnet, daß** als Komponente C Cyclohexylmethyldimethoxysilan, Biscyclopentyldimethoxysilan oder Diphenyldimethoxysilan eingesetzt werden.

11. Verfahren nach einem der Ansprüche 1 bis 10, **dadurch gekennzeichnet, daß** die Komponente B in einer Konzentration von 0,001 bis 10 mmol/l, vorzugsweise von 0,1 bis 5 mmol/l, eingesetzt wird.

12. Verfahren nach einem der Ansprüche 1 bis 11, **dadurch gekennzeichnet, daß** die Komponente C in einem Verhältnis R zur Komponente B, das sich als Quotient der Konzentration B zu der Konzentration C jeweils in mol/l berechnet und das im Bereich von 1 bis 200, bevorzugt 2 bis 100, besonders bevorzugt 2,5 bis 75 liegt, eingesetzt wird.

## Claims

1. A process for preparing a high-molecular-weight reactor blend from a high-molecular-weight ethylene-propylene copolymer and a low-molecular-weight polypropylene which has an ethylene content in the range from 0.1 to 2% by weight, a melt flow index MFR (230/5) of ≤ 5 dg/min, and a molar mass distribution M_{w}/Mₙ in the range from 6 to 20, by copolymerizing propylene and ethylene in a first step, and by polymerizing propylene and ethylene transferred from the first to the second step, and, if appropriate, copolymerizing with another 1-olefin having from 4 to 20 carbon atoms in suspension at a temperature in the range from 30 to 150°C, and a pressure of from 10 to 100 bar, and with a residence time of from 30 min to 6 h, in the presence of a catalyst, of an organoaluminum compound (B) and of an organosilicon compound (C), in a second step, which comprises, in the first step, using the suspension medium as both monomer and suspension medium, and comprises preparing in the first step of the reaction a high-molecular-weight ethylene-propylene copolymer which has a viscosity of from 500 to 1400 ml/g and forms a proportion of from 20 to 80% of the entire polymer, the entire polymer after the second step of the reaction having a viscosity of from 200 to 400 ml/g and a polydispersity M_{w}/Mₙ of from 6 to 20, where a phase ratio of from 2.5 to 4 1 of liquid propylene per kg of PP is set in the first step of the reaction and in the second step of the reaction the polymerization takes place at a temperature in the range from 55 to 100°C, the phase ratio set being from 1 to 2.5 1 of liquid propylene per kg of PP, where different phase ratios are set in the first and in the second reaction step.

2. The process according to claim 1, wherein the reactor blend has an MFR (230/5) in the range from 0.02 to 2 dg/min and a molecular weight distribution M_{w}/Mₙ in the range from 7 to 18, and includes from 0.1 to 1.5% by weight of ethylene units.

3. The process according to claim 1, wherein, in the first reaction step, a polypropylene is prepared which forms a proportion by weight of from 45 to 75% by weight of the entire polymer.

4. The process according to claim 1, wherein, in the second reaction step, a low-molecular-weight polypropylene is prepared which has a viscosity of from 200 to 400 ml/g and forms a proportion of from 55 to 25% by weight of the entire polymer.

5. The process according to claim 1, wherein, in the second reaction step, a low-molecular-weight polypropylene is prepared which has a viscosity of from 200 to 400 ml/g and which forms a proportion of from 52 to 35% by weight of the entire polymer.

6. The process according to any one of claims 1 to 5, wherein a prepolymerization is carried out, where component B and component C are mixed with one another before the prepolymerization and are then brought into contact with the catalyst, and where propylene is prepolymerized in the presence of these active components and in suspension, with a reaction time of from 4 to 15 min, and at a temperature in the range from 10 to 25°C.

7. The process according to any one of claims 1 to 6, wherein, in the first reaction step, the polymerization is carried out in liquid propylene at a temperature of from 55 to 100°C and with a reaction time of from 0.5 to 3.5 h.

8. The process according to any one of claims 1 to 7, wherein, in the first reaction step, an ethylene concentration in the liquid phase of from 0.1 to 2% by weight is set.

9. The process according to any one of claims 1 to 8, wherein trimethylaluminum, triisobutylaluminum or triethylaluminum is employed as component B.

10. The process according to any one of claims 1 to 9, wherein cyclohexylmethyldimethoxysilane, biscyclopentyldimethoxysilane or diphenyldimethoxysilane is employed as component C.

11. The process according to any one of claims 1 to 10, wherein component B is employed in a concentration of from 0.001 to 10 mmol/l, preferably from 0.1 to 5 mmol/l.

12. The process according to any one of claims 1 to 11, wherein component C is employed in a ratio R to component B which is calculated as the quotient obtained by dividing the concentration of B by the concentration of C, each in mol/l, and which is in the range from 1 to 200, preferably from 2 to 100 and particularly preferably from 2.5 to 75.

## Revendications

1. Procédé de préparation d'un mélange dans un réacteur à masse moléculaire élevée constitué d'un copolymère d'éthylène et de propylène à masse moléculaire élevée et d'un polypropylène à masse moléculaire faible, qui présente une teneur en éthylène comprise dans la plage de 0,1% à 2% en poids, un indice de fusion complète MFR (230/5) ≤ 5 dg/min et une polymolécularité Mₘ/Mₙ dans la plage de 6 à 20, au moyen d'une copolymérisation du propylène et de l'éthylène dans une première étape et, dans une deuxième étape, au moyen d'une polymérisation du propylène, de l'éthylène que l'on a transféré auparavant de la première étape dans la deuxième, et éventuellement au moyen d'une copolymérisation avec une 1-oléfine supplémentaire présentant 4 à 20 atomes de C, en suspension et à une température comprise dans la plage de 30°C à 150°C, à une pression comprise entre 10 bars à 100 bars et pendant un temps de séjour compris entre 30 min et 6 h, en présence d'un catalyseur, d'un composé organo-aluminique (B) et un composé organo-silicique (C), **caractérisé en ce que**, dans la première étape, l'agent de suspension constitue non seulement le monomère mais encore l'agent de suspension, **en ce que** l'on prépare, dans la première étape réactionnelle, un copolymère d'éthylène/ propylène ayant une masse moléculaire élevée, présentant une viscosité comprise entre 500 ml/g et 1 400 ml/g et représentant une proportion comprise entre 20% et 80% par rapport au polymère total, et **en ce que** le polymère total présente, ultérieurement à la deuxième étape réactionnelle, une viscosité comprise entre 200 ml/g et 400 ml/g et une polymolécularité Mₘ/Mₙ comprise entre 6 et 20, en choisissant, dans la première étape réactionnelle, un rapport de phases compris dans la plage de 2,5 l à 4 l de propylène liquide par kg de PP et en polymérisant, dans la deuxième étape réactionnelle, à une température comprise dans la plage de 55°C à 100°C, grâce à quoi on choisit un rapport de phases compris entre 1 l et 2,5 l de propylène liquide par kg de PP, grâce à quoi on choisit des rapports de phases différents dans la première et dans la deuxième étape réactionnelle.

2. Procédé selon la revendication 1, **caractérisé en ce que** le mélange dans un réacteur présente un MFR (230/5) compris dans la plage de 0,02 dg/min à 2 dg/min et une polymolécularité Mₘ/Mₙ comprise dans la plage de 7 à 18, et **en ce qu'**il est constitué de motifs d'éthylène à raison de 0,1% à 1,5% en poids.

3. Procédé selon la revendication 1, **caractérisé en ce que** l'on prépare, dans la première étape réactionnelle, un polypropylène dans une proportion comprise entre 45% et 75% en poids par rapport au polymère total.

4. Procédé selon la revendication 1, **caractérisé en ce que** l'on prépare, dans la deuxième étape réactionnelle, un polypropylène à faible masse moléculaire présentant une viscosité comprise entre 200 ml/g et 400 ml/g et représentant une proportion comprise entre 55% et 25% en poids par rapport au polymère total.

5. Procédé selon la revendication 1, **caractérisé en ce que** l'on prépare, dans la deuxième étape réactionnelle, un polypropylène à faible masse moléculaire présentant une viscosité comprise entre 200 ml/g et 400 ml/g et dans une proportion comprise entre 52% et 35% en poids par rapport au polymère total.

6. Procédé selon l'une des revendications de 1 à 5, **caractérisé en ce que** l'on procède à une prépolymérisation en mélangeant le composant B et le composant C avant de réaliser la prépolymérisation puis en les mettant en contact avec le catalyseur, procédé lors duquel on réalise, en présence de ce composant actif, une prépolymérisation du propylène en suspension, pendant un temps de séjour compris entre 4 min et 15 min et à une température comprise dans la plage de 10°C et 25°C.

7. Procédé selon l'une des revendications de 1 à 6, **caractérisé en ce que** l'on procède, dans la première étape réactionnelle de la polymérisation, à une polymérisation dans le propylène liquide, à une température comprise entre 55°C et 100°C et pendant un temps de séjour compris entre 0,5 h et 3,5 h.

8. Procédé selon l'une des revendications de 1 à 7, **caractérisé en ce que** l'on règle, dans la première étape réactionnelle, la concentration en éthylène dans la phase liquide entre 0,1% et 2% en poids.

9. Procédé selon l'une des revendications de 1 à 8, **caractérisé en ce que** l'on met en oeuvre, en tant que composant B, le triméthylaluminium, le triisobutylaluminium ou le triéthylaluminium.

10. Procédé selon l'une des revendications de 1 à 9, **caractérisé en ce que** l'on met en oeuvre, en tant que composant C, le cyclohexylméthyl-diméthoxysilane, le biscyclopentyl-diméthoxysilane ou le diphényldiméthoxysilane.

11. Procédé selon l'une des revendications de 1 à 10, **caractérisé en ce que** l'on met en oeuvre le composant B à une concentration comprise entre 0,001 mmole/l et 10 mmoles/l, de préférence entre 0,1 mmole/l et 5 mmoles/l.

12. Procédé selon l'une des revendications de 1 à 11, **caractérisé en ce que** l'on met en oeuvre le composant C dans une proportion R par rapport au composant B, proportion calculée en tant que quotient de la concentration B par rapport à la concentration C, à chaque fois exprimée en mole/l et comprise dans la plage de 1 à 200, de préférence de 2 à 100 et de manière particulièrement préférée de 2,5 à 75.
